# EUROPEAN PATENT APPLICATION

(11) **EP 3 653 500 A1**
(43) Date of publication of application: **20.05.2020**
(21) Application number: 19204809.8
(22) Date of filing: 23.10.2019
(51) Int. Cl.: B64C 39/02, B64D 1/22, B25J 9/00

(54) **SYSTEMS AND METHODS FOR AERIAL PACKAGE PICKUP AND DELIVERY**

(30) Priority: 13.11.2018 US 201816188947
(71) Applicant: Aurora Flight Sciences Corporation, Manassas, VA 20110 (US)
(72) Inventor: BOSWORTH, William Robert, Manassas, 20110 (US); KEARNEY-FISCHER, Martin, Manassas, 20110 (US)
(74) Representative: Durling, Barbara Eleanor Ravenhill

(57) **Abstract**

An aircraft-based object manipulation system and corresponding method. The object manipulation system is coupled to the airframe of an aircraft, and comprises: - a plurality of sensors configured to identify a physical characteristic of an object; - a processor communicatively coupled to the sensors and configured to control operation of the object manipulation system based on information from the plurality of sensors, and to control alignment between the object and the aircraft.

## Description

### FIELD

This present disclosure generally relates to aircraft systems and, more specifically, to aircraft and aircraft systems capable of identification, acquisition, transportation, and emplacement of objects.

### BACKGROUND

The prevalence of aerial package delivery (APD) is a growing area in many sectors, including commercial and defense. In current practice, package delivery is generally performed with human operators. For instance, human operators are required to both operate the means of transport (*e.g*., the vehicle transporting the package, such as a flight vehicle or lorry), and on the ground to upload the package (*e.g*., handling and securing the package).

In contrast, unmanned aerial vehicles (UAV) have gained prevalence in the commercial and defense markets. Indeed, commercial low-cost UAV development is an active and growing industry where UAV technology has proven to be a valuable tool for mission profiles involving intelligence, surveillance, reconnaissance, and payload acquisition and delivery. UAV companies continue to introduce UAVs with greater capabilities and, more recently, UAVs have been employed to manipulate and transport objects. For example, a UAV system is being designed to delivery packages to customers. The current generation of low-cost commercial off-the-shelf (COTS) UAVs (*i.e.,* consumer UAVs) is already capable of performing relatively safe, small-scale operations. Existing consumer UAVs, however, suffer from aerodynamic instability and inaccuracy, which makes such UAVs incapable of precision grasping and emplacement of objects. Indeed, the vast majority of UAVs are poorly equipped for object transportation.

Accordingly, a need exists for an aerial vehicle (*e.g.,* a UAV) that is capable of high-precision manipulation, transportation, and emplacement of objects in a variety of circumstances. A need also exists for an object manipulation system with improved aerodynamic stability and accuracy to provide increased object transportation services.

### SUMMARY

Aspects provide an aerial manipulation system for manipulating an object via an aircraft, and a method of manipulating an object using an aerial manipulation system of an aircraft, as defined in the independent claims. Optional features of the aspects are set out in the dependent claims.

Disclosed herein are aircraft and aircraft systems capable of manipulating, securing, transporting and emplacing objects, including, *inter alia,* an object manipulation system for such an aircraft. In some examples, the aircraft is a vertical take-off and landing (VTOL) aircraft. In some examples, the aircraft is an autonomous, unmanned aerial vehicle (UAV).

According to a first aspect, an aerial manipulation system for manipulating an object via an aircraft comprises: a plurality of sensors configured to identify a physical characteristic of the object; an object manipulation system coupled to an airframe of the aircraft and configured to secure the object to the airframe; and a processor communicatively coupled to the plurality of sensors and configured to control operation of the object manipulation system based at least in part on information from the plurality of sensors, wherein the processor is further configured to control alignment between the object and the airframe.

In certain aspects, the plurality of sensors comprises an optical module.

In certain aspects, the optical module comprises a RGB (red/green/blue) camera.

In certain aspects, the object manipulation system comprises one or more robotic arms to align the airframe and the object and to secure the object relative to the airframe.

In certain aspects, the one or more robotic arms are configured to removably couple to the airframe via a mounting structure.

In certain aspects, the one or more robotic arms are configured to account for movement of the aircraft, thereby allowing the aircraft to move while maintaining contact between at least one robotic arm and the object.

In certain aspects, the one or more robotic arms are configured to operate in response to commands from an operator.

In certain aspects, the operator is remotely-situated, and the commands from the operator are received by the processor over a wireless link.

In certain aspects, the object manipulation system comprises a latching mechanism coupled to the airframe, the one or more robotic arms being configured to position the object relative to the latching mechanism in order to secure the object to the airframe.

In certain aspects, the one or more robotic arms are configured to secure the object relative to the airframe in a position that is at or near the center of mass of the aircraft.

In certain aspects, the aircraft is configured to cooperate with a ground-based landing structure to facilitate object manipulation.

In certain aspects, the ground-based landing structure is configured to support the object.

In certain aspects, the ground-based landing structure comprises one or more landing supports sized and shaped to accept the aircraft.

In certain aspects, the one or more landing supports are configured to guide the object manipulation system toward the object during a landing operation of the aircraft based at least in part on a characteristic of the object or the aircraft.

In certain aspects, the one or more landing supports sized are arranged in a funnel-type arrangement.

In certain aspects, the ground-based landing structure include wheels and a drive system to move the object relative to the aircraft or the object manipulation system during a landing operation of the aircraft.

In certain aspects, the ground-based landing structure is configured to account for unexpected or unwanted movement of the aircraft dynamically during the landing operation of the aircraft.

In certain aspects, the one or more robotic arms are configured to pick up the object.

In certain aspects, the aircraft is a vertical take-off and landing (VTOL) aircraft.

In certain aspects, the VTOL aircraft is an unmanned aerial vehicle (UAV).

In certain aspects, the UAV is a multirotor UAV aircraft having a plurality of rotor booms extending radially from the airframe, each of the plurality of rotor booms having a propulsor coupled thereto.

In certain aspects, the UAV is a helicopter.

In certain aspects, the aircraft is a VTOL aircraft that comprises landing gear coupled to the airframe, wherein the landing gear is configured to retract during object acquisition and to deploy during a landing operation of the aircraft.

In certain aspects, the landing gear comprises a wheels or skids.

In certain aspects, the object manipulation system comprises one or more feedback sensors to provide feedback data to the processor when interacting with the object.

In certain aspects, the one or more feedback sensors comprise an optical sensor or a pressure sensor.

In certain aspects, the object comprises a code or a fiducial marker to aid in determining a physical characteristic of the object.

In certain aspects, the object is stationary and the processor is configured to control a flight controller of the aircraft as a function of inputs from the plurality of sensors to align the airframe with the object by adjusting the position and orientation of the aircraft.

In certain aspects, the object is movable and the processor is configured to control the object manipulation system to align the object with the airframe.

According to a second aspect, a method of manipulating an object using an aerial manipulation system of an aircraft comprises: identifying, via a first sensor, a characteristic associated with a target object for transport; positioning the aircraft to hover over the object such that the object is accessible to an object manipulation system; aligning the object and a latching mechanism; and securing the object, via the latching mechanism, to the aircraft.

In certain aspects, the method may further comprises: landing the aircraft on a surface by a landing gear system attached to an airframe of the aircraft; adjusting a position of the aircraft via the landing gear to align the latching mechanism with the object, wherein the landing gear system maintains contact with the surface during adjustment; and taking off with the secured object.

In certain aspects, the physical characteristic is one of height, length, width, weight, or shape of the object.

According to a third aspect, a ground-based landing structure to facilitate manipulation of an object using an object manipulation system coupled to an aircraft comprises: an object support element to support the object; and a landing support element to support the aircraft upon landing, wherein the landing support element is configured to guide the aircraft during a landing operation of the aircraft to direct the object manipulation system toward the object.

In certain aspects, the ground based landing structure is configured to adjust the object support element based at least in part on a characteristic of the object or the aircraft.

In certain aspects, the ground based landing structure is configured to adjust the object support element dynamically during the landing operation of the aircraft.

In certain aspects, the ground based landing structure is configured to adjust the landing support element based at least in part on a characteristic of the object or the aircraft.

In certain aspects, the ground based landing structure is configured to adjust the landing support element dynamically during the landing operation of the aircraft.

In certain aspects, the ground based landing structure comprises a plurality of wheels and a drive system to move the object relative to the aircraft or the object manipulation system during a landing operation of the aircraft.

In certain aspects, the ground-based landing structure is configured to account for unexpected or unwanted movement of the aircraft dynamically during a landing operation of the aircraft.

In certain aspects, the landing support element comprises a protective cover to mitigate damage to the aircraft.

In certain aspects, the protective cover comprises rubber.

In certain aspects, the protective cover is a pneumatic structure.

In certain aspects, the ground-based landing structure is configured to communicate with the aircraft during a landing operation of the aircraft.

In certain aspects, the ground-based landing structure is configured to align the object relative to the object manipulation system based on a communication with the aircraft.

### DESCRIPTION OF THE DRAWINGS

The foregoing and other objects, features, and advantages of the devices, systems, and methods described herein will be apparent from the following description of particular embodiments thereof, as illustrated in the accompanying figures, where like reference numbers refer to like structures. The figures are not necessarily to scale, emphasis instead is being placed upon illustrating the principles of the devices, systems, and methods described herein.
Figures 1a through 1c illustrate an example vertical take-off and landing (VTOL) aircraft.
Figures 2a through 2c illustrate another example VTOL aircraft.
Figures 3a and 3b illustrate an example VTOL aircraft operating an example object manipulation system.
Figures 4a through 4d illustrate an example object manipulation system for use with the example VTOL aircraft of Figures 3a and 3b.
Figure 5 illustrates an example diagram of an integrated architecture for the object manipulation system.
Figures 6a and 6b illustrate an example VTOL aircraft operating another example object manipulation system.
Figures 7a through 7c illustrate an example operation of the UAV as it travels toward, and grasps, an object.
Figures 8a and 8b illustrate an example VTOL aircraft operating an example alignment funnel system for object manipulation.
Figures 9a through 9g illustrate an example VTOL aircraft operating an example retraction and deployment system for object manipulation.
Figures 10a and 10b illustrate an example VTOL aircraft operating example landing gear configured to position the VTOL aircraft for object manipulation.
Figures 11a and 11b illustrate an example VTOL aircraft cooperating with an example landing structure to facilitate object manipulation.
Figure 12 illustrates an example diagram of an integrated architecture for an aircraft processor to operate in conjunction with an object manipulation system.
Figure 13 illustrates an example method for use with an object manipulation system.

### DESCRIPTION

The present disclosure is directed to aircraft and aircraft systems capable of manipulating, securing, transporting, and emplacing objects (*e.g*., cargo, packages, and the like). The aircraft can be a VTOL-type vehicle, including small and large UAVs. In some examples, the UAV is an autonomous UAV. The aircraft may be configured to employ an object manipulation system to interact with the object, by one or more sensors, one or more appendages, a robotic system (*e.g.,* a grabber or other type of manipulator, operated by a pilot and/or with autonomous function), and/or other type of device or system to facilitate object manipulation.

The systems and methods disclosed herein provide for external manipulation and latching of the object to the aircraft. For example, an autonomous VTOL aircraft is configured to identify the object via sensors (*e.g.*, via optical capture and image recognition), approach the object with the aid of sensors (*e.g*., GPS, accelerometers, optical sensors, LIDAR, radar, etc.), manipulate the object (*e.g*., adjust position and/or orientation of the object) via robotic arms and/or sensors (*e.g.*, pressure/strain gauges, optical sensors, impedance sensors, etc.), and/or secure the object by a latching mechanism (*e.g*., a robotic grabber/arm, a magnetic locking mechanism, placement in a housing, etc.).

In examples, the latching mechanism may be located external to a housing of the autonomous VTOL aircraft, and/or the object is otherwise secured in an external relationship with the aircraft (*e.g.,* an external housing). In such an arrangement, the object is secured to the aircraft to ensure minimal impact on the aircraft's ability to take flight (*e.g.,* the aerodynamics of the aircraft are not substantially compromised by securing of the object). Once secured, the autonomous VTOL aircraft can safely take-off and transport the object to a desired location. In a manner similar to object acquisition, the object manipulation system can unload the object safely without compromising the integrity of the object or the aircraft.

As described in greater detail below, the presently disclosed systems and methods address a host of issues associated with the concept of external object latching. For example, landing gear and/or other mechanisms conventionally fixed to the under-body of an aircraft airframe can make approach and/or acquisition of the object difficult. The presently described system reduces the risk of the landing gear making inadvertent contact with the object. Further, the system provides improved alignment features, which result from intentional contact between the aircraft systems and the object as the aircraft aligns itself with the object, and/or aligns the object with the aircraft.

Systems located on the underbody of the aircraft result in enhanced safety, speed, and accuracy for object pickup and delivery, such as by use of an autonomous UAV. The latching mechanism (*e.g*., a robotic arm; grippers, etc.) of the object manipulation system can be located at or near the underbody of the aircraft, which can hold objects in a fixed aerodynamic position at or near the center of mass of the aircraft, thereby providing favorable aerodynamic performance compared to common configurations, such as a slung load. For example, a slung load introduces a highly-undamped vibrational mode to the aircraft that can be excited by otherwise normal flight characteristics such as wind gusts or vehicle accelerations. Therefore, a slung-load package delivery arrangement is relatively more vulnerable to drag, weather conditions (e.g., wind gust), vibrations, etc.

In some examples, traditional landing gear can be modified or replaced to aid in object acquisition. For example, landing gear typically supports landing on flat terrain (*e.g*., skids or wheels). The presently disclosed systems and methods may employ a variety of alternatives, such as active landing gear and other mechanisms used to make initial contact with the object and/or the surrounding environment. Such contact aids in guidance of the aircraft and/or the object manipulation system to position and/or secure the object for transport.

In examples, in addition to supporting the aircraft upon landing, active landing gear may use a range of operating impedances (*i.e.,* mechanical impedance, which broadly consists of mechanical behaviors that resemble springs, dampers, masses, etc.) to enable "touch" or "feeling" for objects without requiring strong interactive forces. Further, active spring and damping control can be used to adjust for displacement errors as aircraft systems interact with the object. In some examples, a robotic arm and/or grabber can be employed, in addition to or as an alternative to active landing gear. Such a robotic system can be operated by a pilot (*e.g*., remotely over a network) and/or autonomously to manipulate and/or secure the object.

Thus, the systems and methods disclosed herein mitigate the risk of collision and damage associated with object pick-up by aerial vehicles. In an improvement over conventional attempts, the systems and methods described herein mitigate potential damage to the aircraft and/or the object due to any inadvertent contact between the flight vehicle and the package. Inadvertent contact between the vehicle and the package can be potentially catastrophic if, for example, the flight vehicle became compromised (*e.g.*, a broken rotor), or if a valuable package is damaged (most notably in a casualty evacuation, or CASEVAC, scenario). As conventional aerial package delivery is unsophisticated and does not address the challenges of unexpected, unplanned, and undesired intermittent contact between object and aircraft, the disclosed systems and methods make object pick-up reliable and safe, enabling an expansion of aerial-based logistics in the defense (*e.g.,* logistics and CASEVAC), and commercial sectors (*e.g.,* warehouses, and urban and rural package delivery). In accordance with the system disclosed herein, the risk of damage to the vehicle and the object (*i.e.,* payload) is significantly lower.

There is much interest in automating APD to increase throughput, decrease cost, and reduce risk (especially in the case of APD in active military environments). In automated APD (AAPD), most studies are performed with small unmanned aerial vehicles-*e.g*., the "taco-copter" which delivers burritos. For example, a winch system may be used that is mounted inside the cabin of a conventional aircraft, such as a helicopter, in which case the helicopter may land near a package, and then the winch extends from the vehicle to acquire the package. In order for the system to function effectively, the package must fit within a relatively small area based on the size and restrictions of the particular aircraft.

One challenge facing such as package pick-up concept surrounds the difficulty of landing close enough to a specific package to bring the package into the cargo bay. In an example where the navigation system is fitted to a UH-1 (AEH-1) helicopter, the size of the vehicle, and the size of standardized packages may require landing the aircraft. In one example, a standardized packaged may be a Joint Modular Intermodal Container (JMIC), though other packages are contemplated. Current systems, such as those employing the UH-1, may not be designed for accurate hovering or even landing, especially under varying conditions (*e.g*., inclement weather, rough terrain, etc.). Moreover, aerial object acquisition carries several operational risks. One challenge is ensuring safe flight dynamics once the flight vehicle has acquired the object. For example, a sling-load contains many potential hazards: as the sling-load could become tangled in trees or power lines, significant clearances must be provided, and the under-damped slung-load could induce significant loading onto the flight vehicle. Any package handling solutions must not exceed the carrying capacity of the flight vehicle, and must not modify the center of mass significantly.

Other systems have made attempts for aerial vehicle package transport. For instance, a slung load system drops a cable to secure an object, which dangles in flight beneath the vehicle during transport. A drawback of the slung-load approach impacts flight dynamics, which are greatly compromised by the vibrational/oscillatory modes induced by the package, as the cable system is highly under-damped with a very low oscillating frequency. This oscillation frequency has led to a significant history of helicopter crashes due to what is known as pilot induced oscillation - wherein the pilot responds to the movements of the load, but rather than mitigating it, ends up amplifying the oscillation because of the disparity in timescales between the payload motions, the pilot's visual observation of those motions, and the aircraft controls. Autonomous systems could suffer from the same vulnerability unless the payload was significantly instrumented. Further, it would also be very challenging to acquire a package autonomously using a sling-load, due to the difficulty in placing a rope/hook precisely onto a package connector. Doing so reliably requires a device/robot/human operator on the ground to make such a connection.

Another risk is the potential of inadvertent contact with the environment and/or the object during pick-up and/or drop-off. For external latching, there is a possibility that inadvertent contact between the aircraft and the environment and/or package can occur. For example, an aircraft employing external grippers may be arranged inside the boundary of passive landing skids. Thus, when a helicopter is flying towards the package, it must hover with its skids straddling the object/package. A significant risk exists that any lateral disturbance of the helicopter could lead to contact between the object and the skids. In certain aspects, the external latching may comprise end-effectors (*e.g*., grippers) and/or latches mounted near the body of the aircraft. Thus, the package is carried externally, but held rigidly near the center of mass of the aircraft. This provides favorable flight dynamics compared to slung load. A significant drawback of traditional external latching approach is that the vehicle must land around the package. Therefore, for large, expensive aircraft, significant risks are involved during landing. Similarly, if the helicopter skids drops down onto the package, then the vehicle and/or package could be catastrophically damaged.

As can be appreciated, a primary risk of most conventional concepts is the potential of inadvertent contact between the flight vehicle and the environment and/or package. This contact can harm the flight dynamics, the package, or the flight vehicle itself. Thus, this strategy to package pickup could enable existing technology to be deployed to pick up packages without significant additional high-risk engineering.

Preferred embodiments of the present disclosure will be described hereinbelow with reference to the accompanying drawings. The components in the drawings are not necessarily drawn to scale, the emphasis instead being placed upon clearly illustrating the principles of the present embodiments. For instance, the size of an element may be exaggerated for clarity and convenience of description. Moreover, wherever possible, the same reference numbers are used throughout the drawings to refer to the same or like elements of an embodiment. In the following description, well-known functions or constructions are not described in detail because they may obscure the disclosure in unnecessary detail. No language in the specification should be construed as indicating any unclaimed element as essential to the practice of the embodiments.

Recitation of ranges of values herein are not intended to be limiting, referring instead individually to any and all values falling within the range, unless otherwise indicated herein, and each separate value within such a range is incorporated into the specification as if it were individually recited herein. The words "about," "approximately," or the like, when accompanying a numerical value, are to be construed as indicating a deviation as would be appreciated by one of ordinary skill in the art to operate satisfactorily for an intended purpose. Ranges of values and/or numeric values are provided herein as examples only, and do not constitute a limitation on the scope of the described embodiments. The use of any examples, or exemplary language ("*e.g*.," "such as," or the like) provided herein, is intended merely to better illuminate the embodiments and does not pose a limitation on the scope of the embodiments. No language in the specification should be construed as indicating any unclaimed element as essential to the practice of the embodiments.

In the following description, it is understood that terms such as "first," "second," "top," "bottom," "side," "front," "back," and the like, are words of convenience and are not to be construed as limiting terms. The various data values (*e.g.,* voltages, seconds, etc.) provided herein may be substituted with one or more other predetermined data values and, therefore, should not be viewed limiting, but rather, exemplary. For this disclosure, the following terms and definitions shall apply:
The terms "aerial vehicle" and "aircraft" refer to a machine capable of flight, including, but not limited to, fixed wing aircraft, unmanned aerial vehicle, variable wing aircraft, and vertical take-off and landing (VTOL) aircraft.

The term "and/or" means any one or more of the items in the list joined by "and/or." As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y, and z."

The terms "circuits" and "circuitry" refer to physical electronic components (*e.g*., hardware) and any software and/or firmware ("code") which may configure the hardware, be executed by the hardware, and or otherwise be associated with the hardware. As used herein, for example, a particular processor and memory may comprise a first "circuit" when executing a first set of one or more lines of code and may comprise a second "circuit" when executing a second set of one or more lines of code. As utilized herein, circuitry is "operable" to perform a function whenever the circuitry comprises the necessary hardware and code (if any is necessary) to perform the function, regardless of whether performance of the function is disabled, or not enabled (*e.g*., by a user-configurable setting, factory trim, etc.).

The terms "communicate" and "communicating" as used herein, include both conveying data from a source to a destination and delivering data to a communications medium, system, channel, network, device, wire, cable, fiber, circuit, and/or link to be conveyed to a destination. The term "communication" as used herein means data so conveyed or delivered. The term "communications" as used herein includes one or more of a communications medium, system, channel, network, device, wire, cable, fiber, circuit, and/or link.

The terms "coupled," "coupled to," and "coupled with" as used herein, each mean a relationship between or among two or more devices, apparatuses, files, circuits, elements, functions, operations, processes, programs, media, components, networks, systems, subsystems, and/or means, constituting any one or more of: (i) a connection, whether direct or through one or more other devices, apparatuses, files, circuits, elements, functions, operations, processes, programs, media, components, networks, systems, subsystems, or means; (ii) a communications relationship, whether direct or through one or more other devices, apparatuses, files, circuits, elements, functions, operations, processes, programs, media, components, networks, systems, subsystems, or means; and/or (iii) a functional relationship in which the operation of any one or more devices, apparatuses, files, circuits, elements, functions, operations, processes, programs, media, components, networks, systems, subsystems, or means depends, in whole or in part, on the operation of any one or more others thereof.

The term "data" as used herein means any indicia, signals, marks, symbols, domains, symbol sets, representations, information, and any other physical form or forms representing information, whether permanent or temporary, whether visible, audible, acoustic, electric, magnetic, electromagnetic, or otherwise manifested. The term "data" is used to represent predetermined information in one physical form, encompassing any and all representations of corresponding information in a different physical form or forms.

The term "database" as used herein means an organized body of related data, regardless of the manner in which the data or the organized body thereof is represented. For example, the organized body of related data may be in the form of one or more of a table, map, grid, packet, datagram, frame, file, email, message, document, report, list, or in any other form.

The term "exemplary" means "serving as an example, instance, or illustration." The embodiments described herein are not limiting, but rather are exemplary only. It should be understood that the described embodiments are not necessarily to be construed as preferred or advantageous over other embodiments. Moreover, the terms "embodiments of the invention," "embodiments," or "invention" do not require that all embodiments of the invention include the discussed feature, advantage, or mode of operation.

The term "memory device" means computer hardware or circuitry to store information for use by a processor. The memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like.

The term "network" as used herein includes both networks and inter-networks of all kinds, including the Internet, and is not limited to any particular network or inter-network.

The term "processor" means processing devices, apparatuses, programs, circuits, components, systems, and subsystems, whether implemented in hardware, tangibly embodied software, or both, and whether or not it is programmable. The term "processor" includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC). The processor may be coupled to, or integrated with, a memory device.

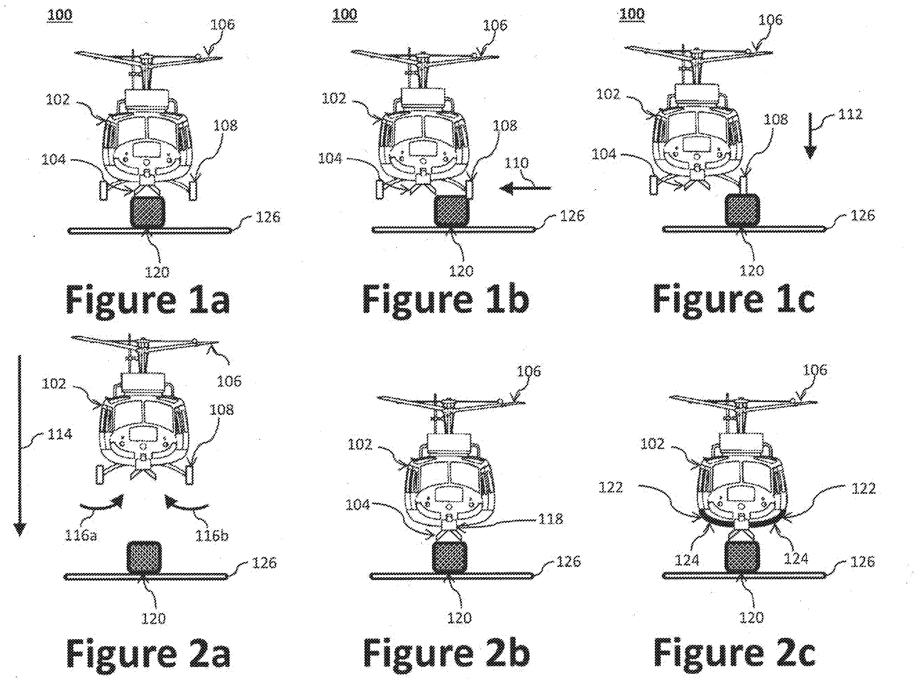

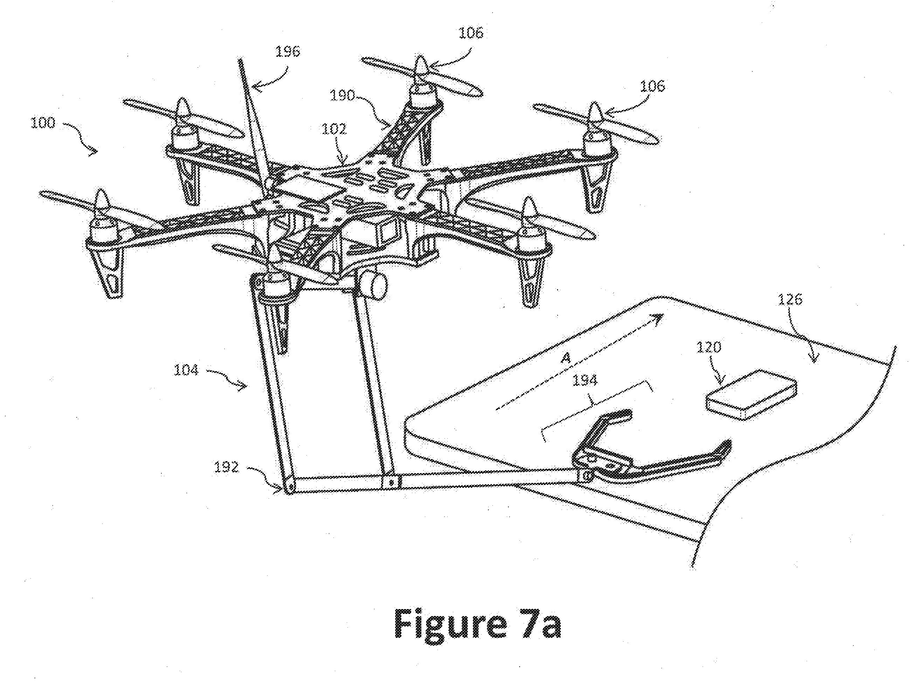

Figures 1a through 1c illustrate an example vertical take-off and landing (VTOL) aircraft 100. In this example, the aircraft 100 is illustrated as a VTOL vehicle (*e.g.,* a helicopter, a multirotor, etc.) and generally comprises an airframe 102, one or more propulsors 106 coupled to the airframe 102 (either directly or through one or more booms), and landing gear 108 fixed to the airframe 102 below. The one or more propulsors 106 (*e.g.,* a motor or engine operatively coupled with a propeller, etc.) serve to provide lift or thrust to the aircraft 100. While Figures 1a through 1c more generally illustrate the aircraft 100 as a helicopter (which may be unmanned and/or autonomous), as will be explained below in connection with at least Figures 7a through 7c, the aircraft 100 may be smaller a multirotor UAV aircraft. Regardless of the aircraft's 100 type/configuration, an object manipulation system 104 (*e.g.,* a latching mechanism) can be attached to the airframe 102 to manipulate and secure an object 120 (*e.g.,* a package, cargo, or other payload) resting on a stable surface 126 (*e.g.,* the ground, a ship deck, vehicle, etc.). While the stable surface 126 is illustrated as horizontal, the stable surface 126 may instead be vertical (*e.g.,* a wall or a side of a structure/building).

In an ideal situation, as illustrated in Figure 1a, the aircraft 100 descends toward the object 120, hovers overhead, and aligns immediately and perfectly with the object 120, without inadvertent and/or unwanted contact between the aircraft 100 and the object 120. However, Figure 1b illustrates a more likely scenario where the position of the aircraft 100 shifts to the side, as indicated by arrow 110. In this scenario, the landing gear 108 can make contact with the object 120. Figure 1c illustrates the aircraft 100 shifting downward, as shown by arrow 112. If the aircraft 100 is not properly aligned with respect to the object 120, as shown, a downward shift could result in the landing gear 108 pressing down on the object 120. Such shift in position can result from a change in wind, mechanical failure, human error, etc. The contact can damage the object 120, the aircraft 100, and/or the environment.

Figures 2a through 2c illustrate an example aircraft 100 configured to mitigate the occurrence of inadvertent contact between the aircraft 100 and the object 120 using an aerial manipulation systems. As shown in the example of Figure 2a, the aircraft 100 may be of suitable size to pick up and transport objects 120, such as cargo, packages, containers, vehicles, personnel, and other payloads; however, depending on the application, the aircraft 100 may alternatively be a smaller multirotor aircraft. In any event, the aircraft 100 may approach the object 120, as shown by descent arrow 114, hover overhead, manipulate and acquire the object 120 by means of an object manipulation system 104, and fly away. In some examples, the object manipulation system is configured to perform one or more of the following tasks: manipulate (*e.g*., position and/or orient) the object 120; lift the object 120 from the stable surface 126; and/or secure (*e.g*., latch) the object 120 to the aircraft 100. In general terms, these capabilities are described as being performed by an object manipulation system, a lifting mechanism, a latching mechanism, and/or a securing mechanism, all of which are collectively identified as an object manipulation system 104.

During pickup of an object 120, the area underneath the aircraft 100 should be clear and free of rigid items (*e.g*., passive landing gear) so that the aircraft 100 can hover near the object 120, while mitigating the risk of a collision and/or tangling with the landing gear 108. This can be achieved by, *inter alia,* retracting the landing gear 108 and/or retracting the object manipulation system 104 (*e.g.,* into or against the airframe 102). In this example, the retracted landing gear 108 may be optimized for avoidance of inadvertent contact with the object 120, rather than for mere aerodynamic benefit.

In the example of Figure 2a, as the aircraft 100 approaches the object 120, as shown by arrow 114, the landing gear 108 can be retracted inward, such as rotated toward the center of the undercarriage of the airframe 102, shown by arrows 116a and 116b. In other examples, the landing gear 108 retracts upward into the airframe 102, rotates outward to a side of the airframe 102, and/or collapses upon itself. In any event, the landing gear 108 can be positioned such that the inadvertent contact with the landing gear 108 and the object 120 is limited.

In approaching the object 120, one or more sensors 118 of the aircraft 100 can aid in determining distance and/or direction to the object 120, as well as identify one or more physical characteristics of the object 120. The one or more physical characteristics can include, *inter alia,* dimensions, geometry, weight, etc., of the object 120. In some examples, the object 120 is configured with a remotely readable code (*e.g.,* via optical signals, wireless signals, such as RFID/NFC, etc.) that contains information such as weight, durability, contents, securing instructions, etc. Additionally or alternatively, information regarding the environment can be provided to the aircraft 100 via the one or more sensors 118.

This object information, as well as any stored and/or networked information regarding the aircraft 100, the object 120, the environment, etc., can be provided to a processor (*e.g*., aircraft processor 162) of the aircraft 100 to aid in determining an approach by the aircraft 100 to the object 120, and the eventual acquisition of the object 120. For example, the aircraft processor 162 may be used to identify, using the one or more sensors 118, one or more obstacles and adjust the approach accordingly. Additionally, the size and shape of the object 120 can be used to inform from which angle the aircraft 100 approaches, as well as whether additional action is needed to facilitate effective acquisition. For instance, if the object manipulation system 104 is located below the aircraft 100, the height from the stable surface 126 at which the aircraft 100 hovers may be adjusted to accept a larger object 120. Additionally or alternatively, if the object 120 is fitted with a particular securing device (*e.g.,* a winch hook-up, a pallet, an arrangement of slots on a container, etc.), the aircraft 100 can prepare a corresponding manipulation and/or securing mechanism and/or adjust the approach to effectively acquire the object 120.

An aspect of the disclose systems and methods that provides significant benefits over conventional systems is the incorporation of autonomous technology. For instance, flight systems, manipulation mechanisms, and/or securing mechanisms can be configured to operate autonomously. In other words, the systems of the aircraft 100 can execute various logic routines, informed by a plurality of sensors, such as sensor(s) 118, stored data, trend analysis, etc., to effectively identify, approach, secure, and transport an object, without the need for human intervention.

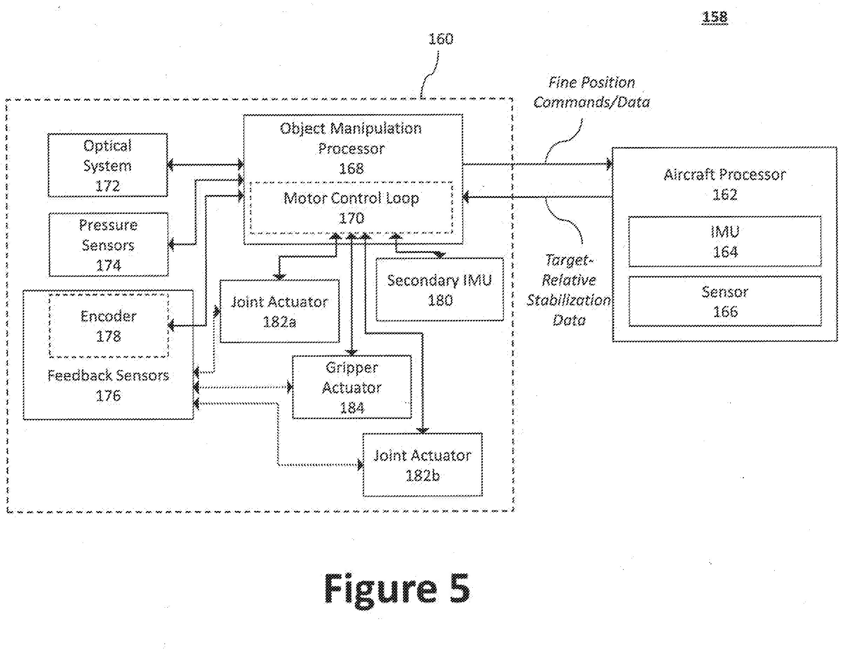

The object manipulation system 104 can be attached to the airframe 102 to manipulate and secure the object 120. The object manipulation system 104 can be configured to operate completely autonomously, be configured to receive instruction from a human operator (*e.g*., via a remote device over a network), or a combination of autonomous function and human direction. In some examples, the systems of the aircraft 100 are entirely autonomous. For example, as will be explained in connection with Figure 5, the object manipulation system 104 may be controlled autonomously or remotely over a network by a user. Thus, flight and object acquisition systems are configured to operate without human instructions.

A series of algorithms or other instructions (*e.g*., logic steps, machine learning, artificial intelligence systems) that are stored to a memory device and run on a processor can inform and adjust operation of each system, such as with the aid of a plurality of sensors 118 (*e.g.,* LIDAR, radar, optical systems, sonic systems, temperature sensors, pressure sensors, etc.). In some examples, sensors 118 are integrated with the object manipulation system 104 and/or the airframe 102, such as to provide feedback to inform the landing and/or other capability of the aircraft 100. Therefore, an aircraft 100 equipped with an object manipulation system 104 is designed for autonomous flight, object acquisition, and transport, as disclosed herein.

While a helicopter-styled VTOL aircraft is illustrated in several figures, the teachings of the present disclosure may similarly be applied to other aircraft, including smaller UAV (*e.g.,* multirotor UAVs - as illustrated in Figure 7a through 7c, for example) and fixed wing aircraft. Further, while the aircraft 100 is illustrated as having a single propulsor 106, a person of skill in the art would understand that additional propulsors 106 may be employed (*e.g*., with a small multirotor UAV, larger VTOL aircraft, etc.) to achieve a desired function and depending on, for example, thrust requirements. The components of the aircraft 100 may be fabricated from metal, a composite material, or a combination thereof. In some examples, the object manipulation system 104 and the landing gear 108 may be fabricated as a singular unit, or as separate components to be coupled to one another. In some examples, the object manipulation system 104 (*e.g.,* a component thereof, such as robot arms or other manipulation devices) can be removably coupled to the airframe 102 such that it can be removed from the airframe 102 and replaced/substitute with another system-type, thereby extending the usefulness of the aircraft and object manipulation system.

An advantage attributed to the presently disclosed systems pertain to using aerial vehicles in conditions where there is no infrastructure to bring the packages to the vehicle (*e.g.,* not at an airport where people and machines will load the aircraft). In some circumstances, this can require picking up packages without landing the aircraft. The disclosed system therefore allows for the following autonomous object acquisition operations: identify the object; approach and hover over the object; manipulate and secure the object; and fly away with the object. Additionally or alternatively, as shown in Figure 2c, the underbody surface of the airframe 102 can be fitted with a protective cover 122 having rugged material properties to handle interaction with objects 120 without damaging the aircraft 100. Such a protective cover 122 can be manufactured of metal, composite material, rubber, etc., to ensure that any unwanted contact with the object 120 or environment does not result in damage to the aircraft 100. A pneumatic structure (*e.g.,* an inflatable with a protective coating, such as rubber) could also be employed.

In examples, the protective cover 122 can include sensors 124, such as embedded touch sensors, which enables the precise location of any contact between the aircraft 100 and the object 120 to be known. For example, embedded strain gauges, pressure sensors, capacitive touch, etc., can be embedded and distributed through the underbody surface of the aircraft 100. The sensors 124 may also include optical sensors to aid in accurate manipulation and acquisition of the object 120. The information can be analyzed by a processor/controller, which can instruct the object manipulation system 104 and/or the flight controller to adjust for effective object latching.

In certain aspects, a marker may be placed on the object to guide the alignment between the object and the aircraft. The aircraft may be equipped with a sensor that identifies a marker as the object enters within the field of view of the sensor. The sensor may be an optical sensor, LIDAR, RADAR-based sensor, and the like. The marker may be a visual marker, an Infrared marker, an Augmented Reality marker, and the like. Alternatively, the object may be transmitting a signal traceable by one of the sensors 124.

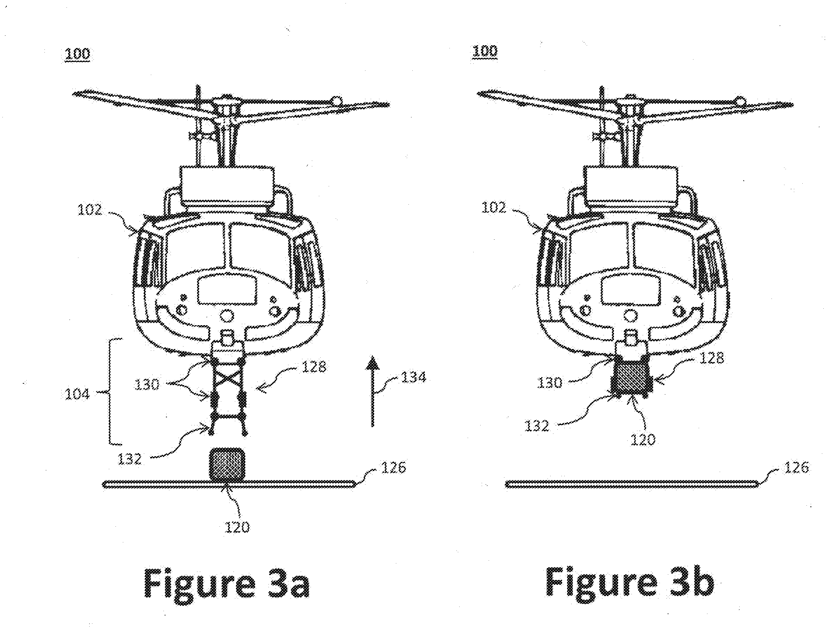

Figures 3a and 3b illustrate an example VTOL aircraft 100 operating an example object manipulation system 104. In the example of Figure 3a, the object manipulation system 104 comprises an external latching mechanism 132, such as a robotic grabber, grasper or gripper. As shown, once the aircraft 100 has reached the object 120, the object manipulation system 104 is deployed to acquire the object 120, as illustrated in Figures 3a and 3b. Figure 3a illustrates the aircraft 100 with object manipulation system 104 configured as a robotic arm 128, extending downward from the airframe 102. As shown, the robotic arm 128 may be provided with grabbers/fingers to secure the object 120. The robotic arm 128 can be deployed via a series of actuated joints 130, controlled by an object manipulation processor (*see e.g.,* Figure 5). The object manipulation system 104 may be mounted to the airframe 102 and may have, for example, a gimbal system, or a U-shaped bracket, to facilitate movement in multiple directions (*e.g.*, six degrees of freedom). The external latching mechanism 132 may be operable to slide underneath the object 120, thereby lifting the object 120 up toward the airframe 102 when the robotic arm 128 is drawn inward, as shown by arrow 134. Having manipulated the object 120, the robotic arm 128 can be retracted, thereby securing the object at or near the airframe 102, as shown in Figure 3b. Once secured, the aircraft 100 is configured for flight, and will take off to transport the object 120. In certain aspects, a processor (*e.g*., object manipulation processor 168) may monitor the object 120 (*e.g.,* its location relative to the aircraft 100) via one or more sensors and control the object manipulation system 104 (*e.g.,* the robotic arm 128 or other manipulation device) to account for movement of the aircraft 100 relative to the object 120, thereby allowing the aircraft 100 to move while maintaining contact between at least one robotic arm 128 and the object 120.

Although illustrated as a single mechanism, the object manipulation system 104 can include separate manipulation and latching mechanisms. For example, a robotic arm 128 may manipulate the object 120, such as to adjust a position of the object 120 to facilitate a separate mechanism to secure the object 120. If the object 120 may be secured by a winch, for example, the robotic arm 128 may push, pull, lift, or otherwise orient the object 120 into a position where the winch can link onto a suitable hook mounted on the object 120. Additionally or alternatively, the robotic arm 128 can position the object 120 into a compartment of the airframe 102, such that the object 120 is transported internal to the airframe 102. Moreover, although the object manipulation system 104 is illustrated as positioned beneath the airframe 102, the object manipulation system 104 can be located on one or more sides, in addition to or instead of the underside. In certain aspects, the landing gear 108 may be configured to assist, or serve as, the robotic arm 128. For example, the landing gear 108 may be fabricated using one or more articulated robotic arms that can move and/or secure the object 120, as well as support the weight of the aircraft 100 during a landing operation.

In certain examples, a function of the robotic arm 128 may increase the reach from the object manipulation system. To that end, the robotic arm 128 may employ a telescoping boom, which may include an actuator assembly, such as a ball screw/nut assembly driven (*e.g*., adjusted in length) by an electric motor or other actuator. The various hardware associated with the object manipulation system may be fabricated from one or more lightweight materials, including metals, metal alloys, plastics (*e.g.,* 3D printed plastic), and/or composite materials. The robotic arm 128 may employ, for example, brushless DC back-driveable motors. In operation, the arm may be independently controlled to raise and lower relative to the aircraft 100 via the robotic arm 128.

Additional sensing from sensors can provide the aircraft 100 with information to localize itself with respect to the object 120 and to navigate toward and grasp the object 120. For example, the robotic arm 128 may be provided with a depth camera and/or one or more touch sensors to measure relative orientation of the robotic arm 128 vis-à-vis the object 120. Information from the one or more sensors reflecting, for example, the object manipulation system's kinematic state can be communicated to a processor (*e.g.*, aircraft processor 162) to provide information about the aircraft 100 precise position with respect to object 120. This information enhances localization and navigation of the aircraft 100 to enable precise grasping of the object 120.

Once the object 120 is acquired, the robotic arm 128 may stabilize the object 120 during transport to prevent, for example, any potential dislodging. For example, stabilization control can be performed using, for example, a single spring-damper gain setting that is selected using optimization and does not actively read accelerometer data, or through active vibration identification and suppression by reading accelerometer data on the aircraft 100 and/or the object 120. In one example, the robotic arm 128 may assume the stowed position of Figure 3b, whereby the object 120 is secured in place under the airframe 102. This stowed configuration brings the robotic arm 128 and object 120 close to the aircraft's 100 center of mass, which provides the aircraft 100 with the most favorable flight dynamics.

The robotic arm 128 serves as the part of the object manipulation system 104 that interacts with the object 120 and the environment. Suitable mechanisms for manipulation, transportation, and emplacement of objects 120 include grippers, magnets, and vacuum cups (*e.g.,* suction cups). For example, a gripper may be employed as the robotic arm's 128 latching mechanism 132. The robotic arm 128 may further include other devices to monitor the environment, such as anti-collision sensors and cameras. In certain aspects, the robotic arm 128 may be interchangeable. To that end, a quick connect device may be provided at a distal end of the arm boom to physically and communicatively engage a corresponding quick connect device positioned on the robotic arm 128. To that end, the quick connect device may provide two mating parts, a master-side and a tool-side designed to lock or couple together, carry a payload, and have the ability to pass utilities such as electrical signals, pneumatic, water, etc. Accordingly, via the quick connect device, an operator would be enabled to interchange quickly replace the type of robotic arm 128 installed upon the arm boom.

For optimal manipulation and securing of the object 120, the robotic arm 128 may provide sensor feedback via the object manipulation system (*e.g.,* to the aircraft processor 162) to adjust orientation of the manipulation system, lifting and/or latching mechanism. For example, pressure sensors (*i.e.,* touch), coupled with distance sensors, can help both the object manipulation system and the aircraft 100 to orient the robotic arm 128 with regard to the object 120, and to ensure that the object 120 is securely grasped. Accordingly, the robotic arm 128 may include feedback sensors to provide feedback to the aircraft processor 162 about the object 120 and/or an environment adjacent or near the object 120.

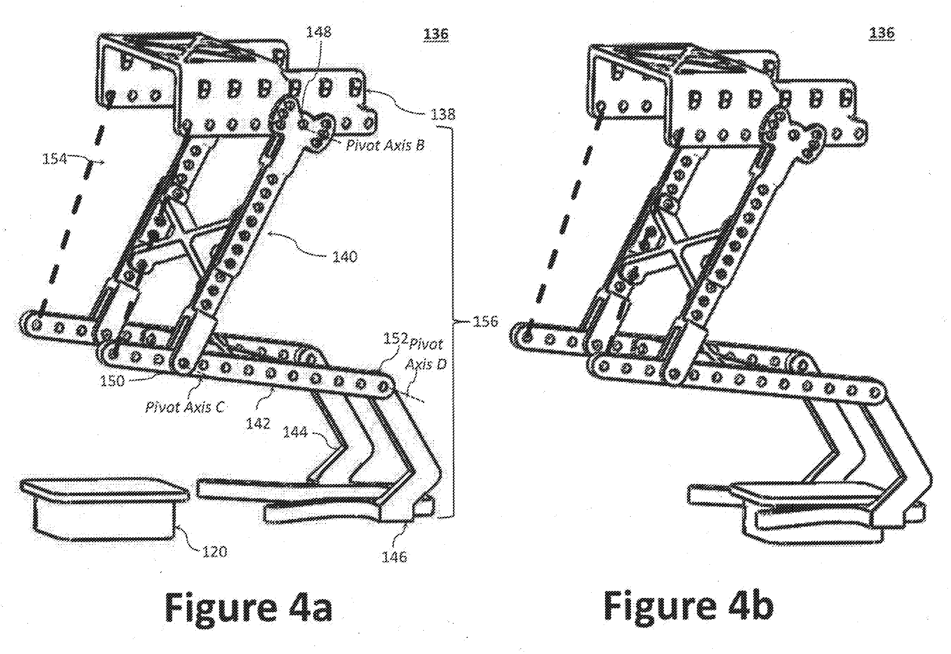

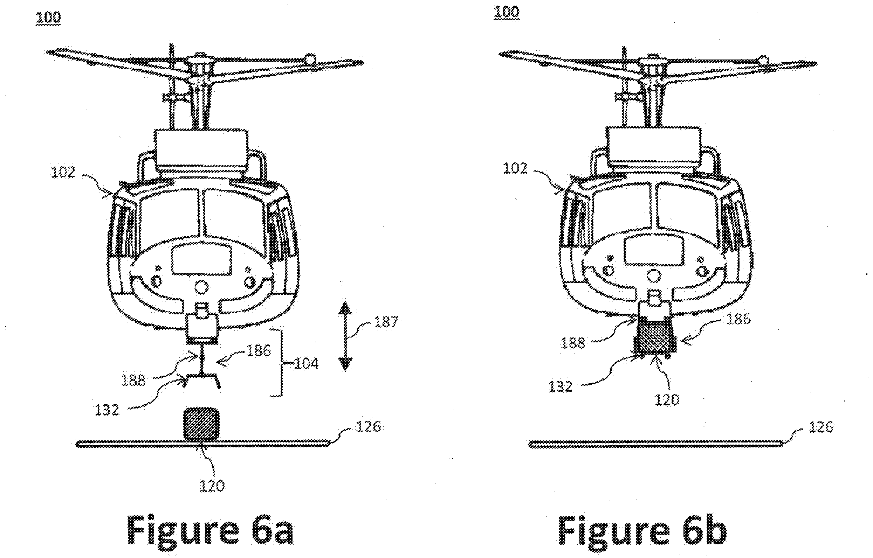

Figures 4a through 4d illustrate an example lifting mechanism 136 for use with an object manipulation system. The lifting mechanism 136 demonstrates that a passive robot limb with low friction, low inertia, and adequate compliance (*i.e.,* stiffness) can enhance the aerial manipulation capabilities of an aircraft 100. The lifting mechanism 136 may include a lightweight robotic leg portion 156 having an end-effector 146 at its distal end (serving as the object manipulation system, latching mechanism, robotic arm, etc.) and coupled to the aircraft via a base 138. The base 138 may be secured to the underside of the aircraft's airframe 102 in a manner similar to the object manipulation system 104 of Figures 3a and 3b (*see also* Figures 6a and 6b). For example, the lifting mechanism 136 may couple to the aircraft 100 in lieu of (or in addition to) the robotic arm 128. As illustrated, the robotic leg portion 156 may include a set (*e.g.,* two) of separate jointed legs, each generally comprises an upper link 140 (akin to a femur), an intermediate link 142 (akin to a shin), and a lower link 144 (akin to a foot). The structural components of the lightweight robotic leg portion 156 (*e.g.,* the upper link 140, the intermediate link 142, the lower link 144, etc.) may be provided with a plurality of holes to allow for different limb geometry and to reduce weight of the structure, however the holes may be omitted.

As illustrated throughout Figures 4a through 4d, the end-effector 146 may be supported by two separate/individual knee and hip joints 150, 152 (*e.g*., similar to joints 130 illustrated in Figures 3a and 3b). Each of the knee joints 150 may be provided with an individual spring elements 154, which can move independently. A two-leg approach provides a wider basin of support for the aircraft 100, while the independent motion of the two legs also enhances the lifting mechanism's 136 tolerance to roll-motion of the aircraft 100. A two-leg approach and end-effector 146 design also allows for the aircraft to move side-to-side, while maintaining contact between the end-effector 146 and the stable surface 126. This capability is enhanced by the independent motion of the two legs, which can enable the end-effector 146 to maintain surface-contact with the stable surface 126 as the flight vehicle moved in roll.

The upper link 140 may be pivotally coupled at its proximal end with the base 138 via a hip (upper) joint 148. The upper link 140 may be pivotally coupled at its distal end with a proximal end of the intermediate link 142 via a knee (intermediate) joint 150. The intermediate link 142 may be pivotally coupled at its distal end with a proximal end of the lower link 144 via an ankle (lower) joint 152. The lower link 144 may be coupled (fixedly or pivotally, as desired) at its distal end with the end-effector 146. While the lower link 144 and the end-effector 146 are generally described as separate components, they may instead be formed as a unitary (single) component, as the case may be when a fixed connection is desired between the lower link 144 and the end-effector 146. Accordingly, one or more of the hip joint 148, knee joint 150, and the ankle joint 152 may employ pivotal joints (*e.g*., rotation about pivot axes B, C, and/or D). The pivotal joints may be formed as a hinge with a pin, a clevis with a pin, etc.

One or more linear spring elements 154 (*e.g.,* metal springs, elastic/rubber bands/strap, etc.) may be placed between the rigid bodies of the intermediate link 142 and the base 138 (or the upper link 140). In certain aspects, the end-effector's 146 rotating ankle joint 152 may be designed such that the force of gravity passively aligns the bottom of the end-effector 146 with the stable surface 126. In certain aspects, the lifting mechanism 136 may be configured with built-in compliance to enable the aircraft to be flown towards the stable surface 126. The compliance of the leg allows for some decoupling of the impact between the end-effector 146 and the stable surface 126, and the range of motion of the leg and ankle allow for contact to be maintained even if the aircraft is not exactly at a single vertical height or orientation. This compliance assists in stability of the aircraft.

The lifting mechanism 136 may be attached to the aircraft 100 such that the end-effector 146 aligns approximately with the center of mass of the aircraft 100. In some examples, the lifting mechanism 136 may "pull" (or "drag") the end-effector 146 (*i.e.,* to place the end-effector 146 slightly "behind" the center of mass) and then drive the aircraft forward. While Figures 4a through 4d illustrate a pushing configuration (*i.e.,* the end-effector 146 slightly forward of the center of mass), placement of the end-effector (whether a passive end-effector 146 or an active end-effector) may be moved aft to enable dragging/pulling configuration.

Figure 5 illustrates a diagram of an example integrated architecture 158 for object manipulation system 160 (*e.g.,* object manipulation system 104), as disclosed herein. In operation, inputs from on-board IMU 164 and aircraft sensors 166 are used by an aircraft processor 162 for coarse stabilization of the aircraft 100. The object manipulation system 160, however, provides additional inputs to the aircraft processor 162 of a similar type to the aircraft feedback laws, but at a finer resolution due in part to the higher-fidelity information that the object manipulation processor 168 (*e.g.,* a micro-controller) derives from other feedback sensors 176, such as target position sensing, pressure sensing, and joint position sensing (*e.g*., from sensors 118, etc.). Therefore, the coarse positioning and attitude/rate inputs may be augmented by finer-scale inputs from the object manipulation system 160.

Integration of the object manipulation system 160 with the aircraft's 100 system can be facilitated using the object manipulation processor 168, which is designed to both communicate with the aircraft processor 162 of the host aircraft 100 and to control the operation of the object manipulation system 160, including its feedback sensors 176 and various actuators (*e.g.*, a first joint actuator 182a, a second joint actuator 182b, the end-effector actuator 184). That is, each of the joint actuators 182a, 182b and end-effector actuator 184 may include, for example, a motor drive circuit that is controlled by the object manipulation processor 168.

The one or more feedback sensors 176 are configured to monitor the force and position of the first joint actuator 182a, the second joint actuator 182b, and the end-effector actuator 184. The one or more feedback sensors 176 may also include a current sensor to monitor current to the various actuators to determine a load. The output signals from one or more feedback sensors 176 and/or the encoder 178 can be provided as feedback to the object manipulation processor 168 for using in, *inter alia,* a motor control loop 170. The encoder 178 may be attached to a rotating object (*e.g.,* the motor or linkage joint) to measure rotation, which enables the object manipulation processor 168 to determine displacement, velocity, acceleration, or the angle at a rotating sensor. For example, position data can be numerically-differentiated to estimate velocity and acceleration; though acceleration can also be measured directly by IMU (multiple IMU's across different joint could provide independent data of each joint). The encoder(s) 178 can be mounted at the actuator, or at the linkage joint itself.

The object manipulation processor 168 may also receive feedback from the other feedback sensors (*e.g*., one or more endpoint pressure sensors 174 of the robotic arm 128, and/or sensors 124, etc.) and the optical module 172 (*e.g.,* a system of sensors 124 and/or sensors 118, etc.), which provides target position sensing data. The object manipulation system 160 is therefore capable of providing: (1) tight inner-loop control for arm impedance control; (2) low-level feedback to the aircraft inner loops (attitudes and rates) to improve the accuracy of aircraft hover; and (3) higher-level commands to the aircraft processor 162 to command the aircraft to approach the object 120. In other words, a processor, such as the aircraft processor 162, may be communicatively coupled with a plurality of sensors and configured to control operation of the object manipulation system autonomously based at least in part on information from the plurality of sensors. The integrated architecture 158 allows for high-bandwidth end-point control of the pick-and-place operation, with the aircraft treated as an element of the overall pick-and-place system.

A secondary IMU 180 may be provided to afford the object manipulation system 160 with an additional 6-axis gyro and accelerometer combination to augment and compensate for any potential shortcomings in the aircraft's avionics and navigation system. Accordingly, the object manipulation processor 168 may also receive data from a redundant secondary IMU 180. The secondary IMU 180 may be positioned on, for example, the end-effector 146.

Figures 6a and 6b illustrate an example VTOL aircraft 100 operating another example object manipulation system 104. The object manipulation system 104 comprises an external latching mechanism 132, such as a robotic grasper, gripper, or other end-effector. However, the object manipulation system 104 has a single limb, which can operate in multiple degrees of freedom. This may provide additional flexibility, such as being able to reach into tighter spots, but less ability to lift heavier loads, for instance.

As shown, once the aircraft 100 has reached the object 120, the object manipulation system 104 is deployed to acquire the object 120, as illustrated in Figures 6a and 6b. Figure 6a illustrates the aircraft 100 with object manipulation system 104 extending downward from the airframe 102. The robotic arm 186 with grabbers/fingers secures the object 120 following descent. The robotic arm 186 is deployed via a series of actuated joints 188, controlled by an object manipulation processor (*e.g.*, object manipulation processor 168). The grabbers 612 are operable to slide underneath the object 120, thereby lifting the object 120 up toward the airframe 102 when the robotic arm 186 is drawn inward, as shown by arrow 187. Having manipulated the object 120, the robotic arm 186 is retracted, thereby securing the object to the airframe 102, as shown in Figure 6b. Once secured, the aircraft 100 is configured for flight, and can increase altitude to transport the object 120.

Figures 7a through 7c illustrate an example operation of aircraft 100 (illustrated as an unmanned aerial vehicle (UAV)) as it travels toward and grasps an object 120. As illustrated, the multirotor UAV aircraft 100 comprises an airframe 102 and a plurality of rotor booms 190 coupled to the airframe 102 and extending radially therefrom. The distal end of each rotor boom 190 may include a propulsor 106. For example, the illustrated multirotor UAV aircraft 100 comprises six rotor booms 190, each having a propulsor 106.

Figure 7a illustrates the aircraft 100 with the object manipulation system 104 lowered to a deployed position from its stowed position, where the endpoint (*e.g*., the latching mechanism - illustrated as end-effector 194) is contacting the stable surface 126 at a touch-down point. As illustrated, the touchdown point is adjacent the object 120. On approach to the target location, the aircraft 100 does not need precise localization because the arm boom 192 lowers until the end-effector 194 contacts a stable surface 126 near the target object 120. Touch sensors on the bottom of the end-effector 194 provide closed loop feedback for aircraft 100, keeping it vertically stable. The optical module (*e.g*., optical module 172) identifies the location of the object 120 and any obstacles in relation to the aircraft 100.

The aircraft 100 can use the stable surface 126 to slide the end-effector 194 as it travels toward the object 120 (identified as Direction A) to perform millimeter-accurate pick-up operation. The aircraft 100 travels toward the object 120 until it is within the end-effector's 194 envelope. While the stable surface 126 is illustrate as large with initial touch-down point being relatively far from the object 120, the endpoint can be configured to touch down within a short distance (*e.g.,* a 2-10 centimeters, or directly on top) of the object 120 using, *inter alia,* visual positioning and AR Tags; however other tags may be used, including RFID and NFC tags. In this example, the aircraft 100 uses a stable surface 126 to orient itself, but any stable surface 126 in any orientation could be used, such as a vertical wall near the object 120. The object 120 itself could also be used as the stable surface 126 if it is properly constrained.

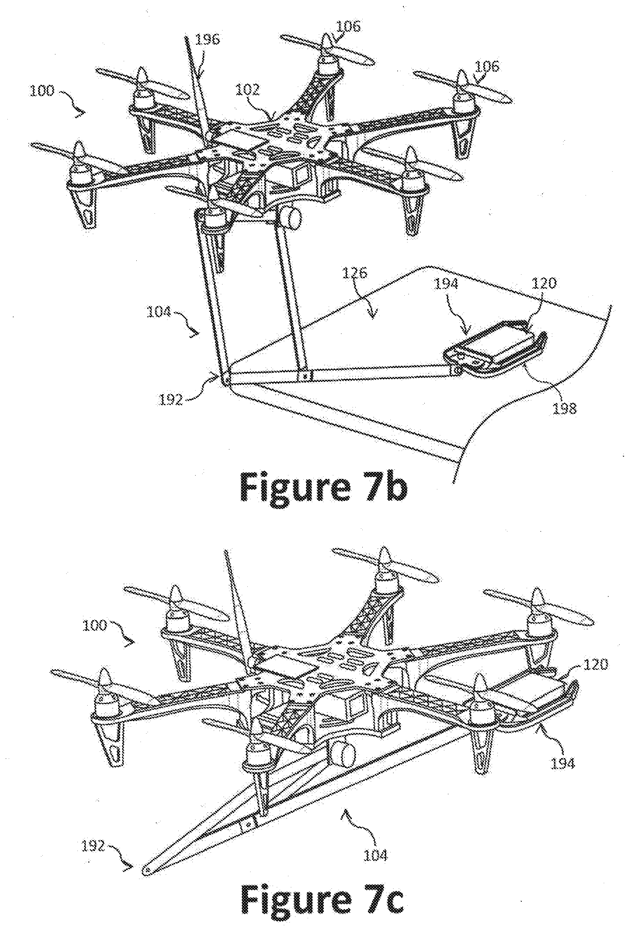

As illustrated in Figure 7b, once the object 120 is within the end-effector's 194 envelope, the end-effector actuator closes the finger members 198 around the object 120. Touch sensors on the end-effector 194 (*e.g.,* the finger members 198) provide feedback to a processor (*e.g.,* the object manipulation processor 168) to ensure a secure grip is established with the object 120. Contact between the end-effector 194 (via the object manipulation system 104, *e.g.,* a robotic arm) and the stable surface 126 will aid flight stability as the aircraft 100 captures the object 120 and prepares to fly away. As illustrated in Figure 7c, the aircraft 100 stows the robotic arm and the object 120 into transport position, adjusting the arm relative to system center of gravity to provide the most efficient flight dynamics. The object manipulation system 104 may also be used to stabilize the object 120 during flight.

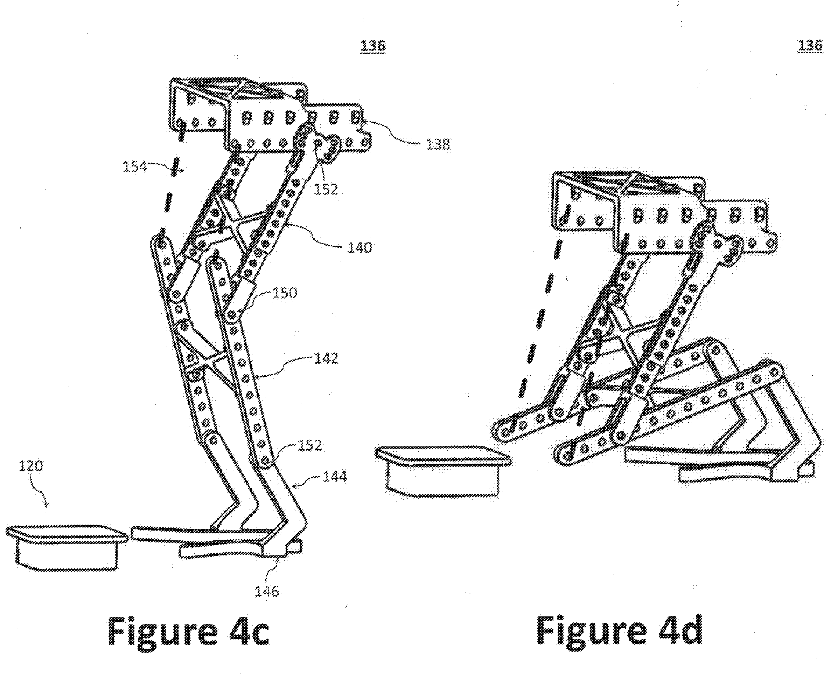

While the above-described object manipulation system 104 and end-effector 194 use active components (*e.g*., motors, actuators, etc.), in certain aspects, a passive lifting mechanism 136 and a passive end-effector 146, such as described with respect to Figure 4, may be used. Certain aerial manipulation systems uses non-compliant robot limbs with high rotational inertia; however, these systems do not provide a decoupling between the aircraft 100 and impact dynamics of contact between the lifting mechanism and the environment (*e.g*., the stable surface 126, a flat surface, or a hard stop that is holding an object 120). A passive lifting mechanism 136, however, may be configured to provide directed compliance and directed constraint to minimize negative effects of impact, provide flexibility between orientation of the end-effector 146 and orientation of the aircraft 100, and exploit reliable constraints in the environment. A passive mechanism (including, *inter alia,* a passive ankle) may be employed in applications where simplicity and cost are needed. For example, motors with feedback control can be programmed to behave as passive joints, while also enabling the passive properties to be tuned by changing the control system.

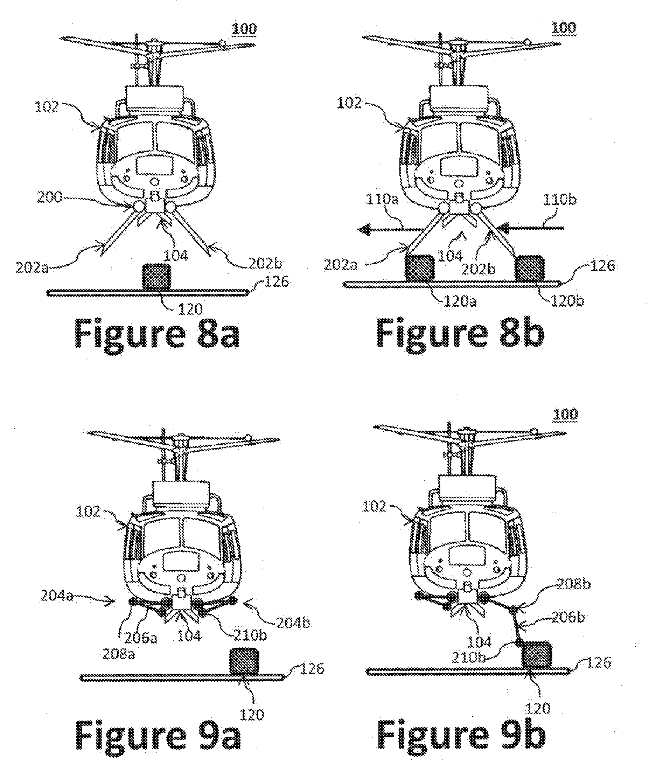

Figures 8a and 8b illustrate an example VTOL aircraft 100 operating an example alignment funnel system for object manipulation. As shown, the alignment funnel system comprising a first alignment guide 202a and a second alignment guide 202b to mechanically guide the alignment of the aircraft 100 to the object 120 or vice versa. These alignment guides 202a, 202b are arranged to define a mechanical funnel to encourage self-alignment of the aircraft's 100 object manipulation system 104 and the object 120 between the alignment guides 202a, 202b.

In the event that the aircraft 100 cannot land in the area, and/or hovering is inaccurate, the alignment guides 202a, 202b can cause the object 120 to be placed into position to support acquisition, such as using a lifting and/or latching mechanism (*e.g*., as part of object manipulation system 104). In some examples, these alignment guides are passive, such as having an impedance value that does not damage either aircraft 100 or object 120, and may or may not be retractable.

The alignment guides are shaped to interact with the object 120 in three dimensions (although the alignment guides shown are substantially planar), such that the alignment guides can cause the object 120 to move (e.g., nudge) forward, backward, or side to side. The alignment guides can be actuated, so that their angle of approach (*i.e.,* the angle from the aircraft 100, amount of funneling) can be adjusted by a motor and/or joint 200. For instance, the degree of funneling can increase as the aircraft 100 the object 120 become aligned.

As illustrated in Figure 8b, the alignment guides 202a, 202b may have adjustable and/or directional impedance control so that they are compliant in some directions, which could lead to tripping, and stiff in other directions, the result of interaction with object 120 leading to proper alignment. For instance, alignment guide 202a illustrates resistance to forces in the direction of 110a from contact with object 120a, in order to align the object 120a beneath the aircraft 100. Conversely, alignment guide 202b illustrates compliance to forces in the direction of 110b from object 120b, so as not to force the object away from the center of aircraft 100.

In some examples, alignment guides can additionally or alternatively include active robotic limbs configured to sense an object and interact with the object to align, position, and/or secure the object. Similarly, the flight controller may reposition the aircraft to align itself with the object based on the interaction between the active robotic limbs and the object. As shown in Figures 9a through 9g, an example VTOL aircraft 100 operating an example retraction and deployment system for object manipulation. The system includes robotic arms 204a and 204b, which can employ multiple limbs 206a and 206b, such as connected by actuatable joints 208a and 208b. The robotic arms 204a and 204b can be operated autonomously and/or by an operator to aid in positioning the object 120 and securing the object 120, such as by object manipulation system 104. In examples, the robotic arms 204a and 204b are configured to retract to a position abutting the airframe 102, such as during flight, shown in Figure 9a.

Figure 9b illustrates robotic arm 204b being deployed to manipulate the object 120. As shown, an element 210b is in contact with the object 120. The element 210b can include a variety of sensors, such as a pressure sensor, optical sensor, etc., to provide data to the system during interaction with the object 120. In examples, the robotic arms 204a and 204b can be used to sense for the object 120 (with low contact impedance) and then reach out and align the object and the aircraft 100 (with higher impedance). In certain aspects, the robotic arms 204a and 204b may also serve as landing gear for the aircraft 100. For example, in the case of smaller, lightweight aircraft, the robotic arms 204a and 204b may be sized and shaped to both manipulate the object 120 and to support the weight of the aircraft 100 when landed.

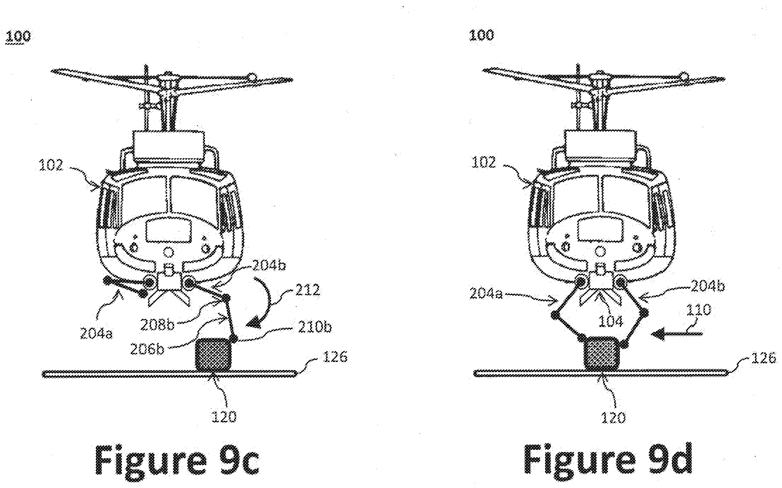

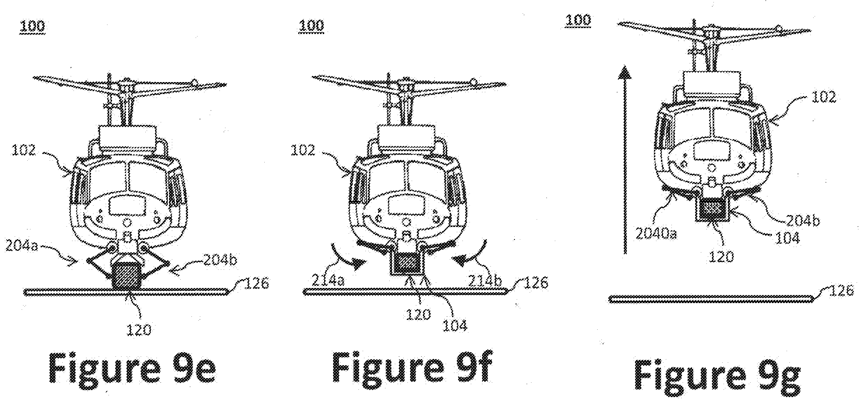

Figure 9c illustrates the arm 206b rotating in a direction 212 about joint 208b, such that element 210b nudges the object 120 into alignment with object manipulation system 104, as shown in Figure 9d. Once in position for acquisition, the aircraft 100 can descend to lift the object, as illustrated in Figure 9e. In some examples, the object manipulation system 104 will deploy downward to reach out from the aircraft's 100 hovering height to avoid further movement of the aircraft 100.

Having secured the object 120 in the object manipulation system 104, as shown in Figure 9f, the robotic arms 204a and 204b can again retract by rotating inward about the joints 208a and 208b in the directions 214a and 214b, respectively. With the object 120 secured close to the aircraft's 100 center of mass, the aircraft 100 takes to flight to transport the object 120, as shown in Figure 9g.

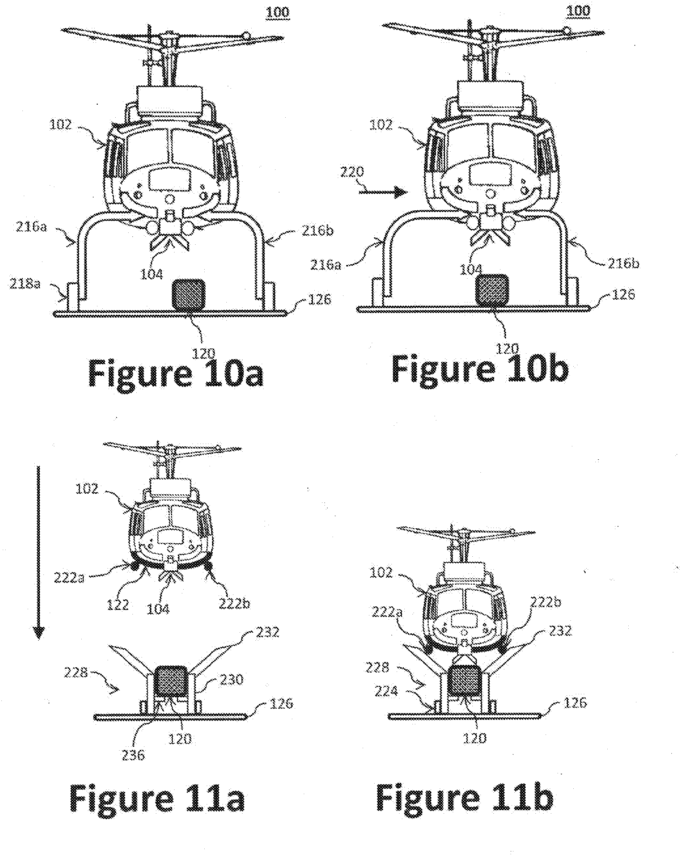

Figures 10a and 10b illustrate another example VTOL aircraft 100 operating an example landing gear system configured to position the VTOL aircraft 100 for object manipulation. The landing gear system includes limbs 216a and 216b, which may be active landing gear (*i.e.,* robotically controlled), configured to move the position of the aircraft 100 relative to the object 120. For example, some object acquisition and delivery scenarios could be managed by landing the aircraft 100 over the object 120, and then maneuvering the aircraft 100 to align the two. As shown, landing the aircraft 100 over the object 120 should employ limbs that are larger than the object 120.

The limbs 216a and 216b may include wheels 218a and 218b, or other type of structure to contact the stable surface 126. Once landed, the limbs 216a and 216b can adjust the position of the aircraft with respect to the stable surface 126 and/or the object 120 on the ground. For example, as shown in Figure 10b, the limb 216a can extend from the airframe 102 while limb 216b retracts, resulting in a horizontal movement of the aircraft 100 in the direction 220.

Figures 11a and 11b illustrate an example VTOL aircraft 100 cooperating with an example ground-based landing structure 228 to facilitate object manipulation. Therefore, the aircraft 100 may be configured to cooperate with a ground-based landing structure 228 to facilitate object manipulation. For example, the ground-based landing structure 228 can be mounted on stable surface 126, constructed of one or more base elements 230. Landing supports 232 extend from the base elements 230 to accept the aircraft 100. The ground-based landing structure 228 may be configured to support the object 120 via one or more object supports 236. The one or more object supports 236 hold the object 120 in position for acquisition when the aircraft 100 lands. The ground-based landing structure 228 may be configured to support the aircraft 100 via one or more landing supports 232. The landing supports 232 may be designed (*e.g*., sized and shaped) to accept the aircraft 100, such that the object manipulation system 104 is aligned with the object 120 when the aircraft 100 has landed on (or in) the ground-based landing structure 228. In other words, the one or more landing supports 232 are configured to guide the object manipulation system 104 toward the object 120 during a landing operation of the aircraft 100 based at least in part on a characteristic of the object 120 or the aircraft 100. For example, the landing supports 232 are illustrated as planar structures extending at an angle from the base elements 230 in a funnel-type arrangement. However, any shape and/or geometry that support both the object 120 and the aircraft 100 are contemplated. For example, a U-shape, a boxed cage, etc., can similarly be employed.

In order to land on the ground-based landing structure 228, the aircraft 100 includes a modified landing system 222a and 222b, such as rails, skids, wheels, etc. As shown, the landing system is constructed to mate with the landing supports 232, as shown in Figure 11b. The underside of the airframe 102 can be protected with a coating or protective cover 122 to mitigate damage from unintentional contact with the object 120 and/or the ground-based landing structure 228. In certain aspects, the landing supports 232 may include a protective cover (*e.g*., protective cover 122) to mitigate damage to the aircraft 100 from contact with the landing supports 232.

In some examples, ground-based vehicles (*e.g*., wheeled vehicles, robotic vehicles, etc.) can insert objects 120 into the landing ground-based landing structure 228. The vehicles can be autonomously operated, and/or can include robotic lifting mechanisms. Once the aircraft 100 has landed, with the object 120 aligned with the object manipulation system 104, the object is secured and prepared for flight, consistent with systems and methods disclosed with respect to the several figures.

In certain aspects, the ground-based landing structure 228 may be coupled to, or integrated with, a ground-based vehicle. For example, the landing ground-based landing structure 228 may be part of a ground-based vehicle that is configured to align itself with the aircraft 100 during descent to ensure an effective landing. To that end, the ground-based landing structure 228 may include wheels 224 and a drive system to transport the object 120 to the pick-up location and to move the object relative to the aircraft 100 and/or the object manipulation system 104 (*e.g.,* for alignment). In one example, the ground-based landing structure 228 may be configured to account dynamically (*e.g.,* in real-time or near real-time) for movement (*e.g.,* unexpected or unwanted movement) of the aircraft 100, thereby allowing the aircraft 100 to move while maintaining contact between the object manipulation system and the object. Alignment may be accomplished through analysis of data from a variety of sensors (*e.g*., optical, LIDAR, etc.) coupled to the ground-based vehicle or through communication with the aircraft 100.

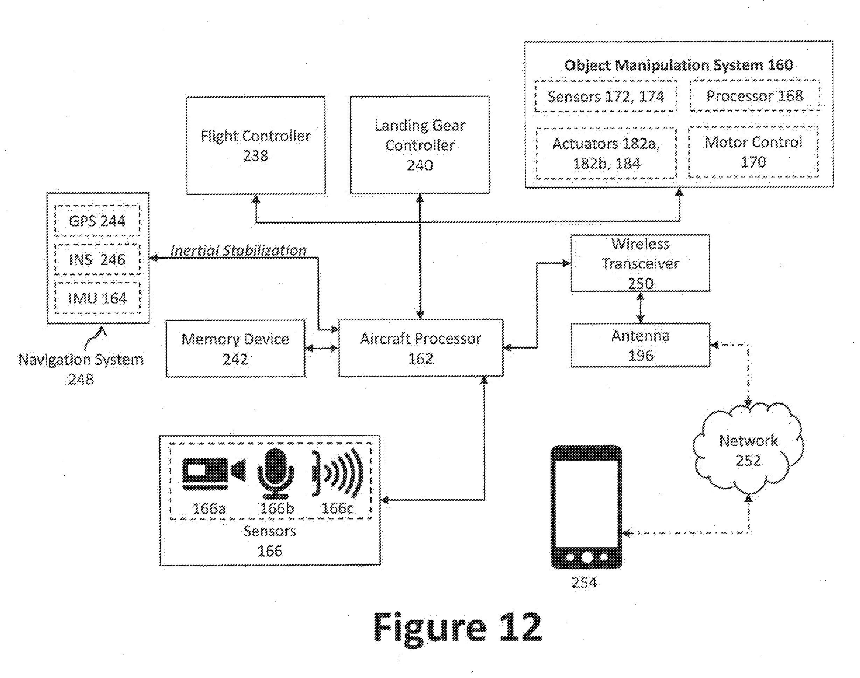

Figure 12 illustrates a block diagram of an aircraft based integrated architecture for an aircraft processor 162 to operate in conjunction with an object manipulation system configured to control the various components and functions of the aircraft 100 illustrated in the several figures. As illustrated, the aircraft includes one or more aircraft processors 162 communicatively coupled with at least one memory device 242, an object manipulation system 160 (*see, e.g.,* Figure 5), a flight controller 238, a landing gear controller 240, a wireless transceiver 250, and a navigation system 248. The aircraft processor 162 may be configured to perform one or more operations based at least in part on instructions (*e.g*., software) and one or more databases stored to the memory device 242 (*e.g.,* hard drive, flash memory, or the like).

The aircraft control system may further include other desired services, such as an antenna 196 coupled with the wireless transceiver 250 to communicate data between the aircraft and a remote device 254 (*e.g*., portable electronic devices, such as smartphones, tablets, and laptop computers) or other controller (*e.g.,* a base station). For example, the aircraft may communicate data (processed data, unprocessed data, etc.) with the remote device 254 over a network 252 or another vehicle, such as another aircraft 100 or the ground-based vehicle. In certain aspects, the wireless transceiver 250 may be configured to communicate using one or more wireless standards such as Bluetooth (*e.g*., short-wavelength, Ultra-High Frequency (UHF) radio waves in the Industrial, Scientific, and Medical (ISM) band from 2.4 to 2.485 GHz), near-field communication (NFC), Wi-Fi (*e.g*., Institute of Electrical and Electronics Engineers' (IEEE) 802.11 standards), etc. The remote device 254 may facilitate monitoring and/or control of the aircraft and its payload(s), including the object manipulation system 160 and sensors 166.

The aircraft processor 162 may be operatively coupled to the flight controller 238 to control operation of the various actuators (*e.g*., those to control movement of any flight component, such as a rotor and/or lift motor) in response to commands from an operator, autopilot, a navigation system 248, sensors 166, or other high-level system via the wireless transceiver 250. In certain aspects, the aircraft processor 162 and the flight controller 238 may be integrated into a single component or circuit. In operation, the flight controller 238 may dynamically (*i.e.,* in real-time or near real-time) and independently adjust thrust from the lift motor during the various stages of flight (*e.g.,* take-off, cruising, landing) to control roll, pitch, or yaw of the aircraft. In other words, the flight controller 238 can independently control the lift motors on the rotor to generate a desired lift thrust for the aircraft. For example, when rotors with rotor blades (*e.g.*, propellers) are used, the flight controller 238 may vary the revolutions per minute (RPM) of the rotor and/or, where desired, vary the pitch of the rotor blades.

The aircraft processor 162 may be operatively coupled to the navigation system 248, which may include a global positioning system (GPS) 244 that is communicatively coupled with an Inertial Navigation System (INS) 246 and/or an inertial measurement unit (IMU) 164, which can include one or more gyros and accelerometers. The GPS 244 gives an absolute drift-free position value that can be used to reset the INS solution or can be blended with it by use of a mathematical algorithm, such as a Kalman Filter. The navigation system 248 may communicate, *inter alia,* inertial stabilization data to the aircraft processor 162, which may be used during flight, landing and takeoff, as well as to facilitate operation of the object manipulation system 160.

To collect data and/or monitor an area, the aircraft may be equipped with multiple sensors 166 including, for example, one or more cameras 166a (*e.g.,* an optical instrument for recording or capturing images and/or video, including light detection and ranging (LIDAR) devices), audio devices 166b (*e.g*., microphones, echolocation sensors, etc.), and other sensors 166c to facilitate system functionality and provide data (*e.g*., photographs, video, audio, sensor measurements, etc.). The sensors 166 are operatively coupled to the aircraft processor 162 to facilitate communication between the sensors 166 and the aircraft processor 162. The data may be used to navigate the aircraft and/or control operation of the object manipulation system 160. The sensors 166 may be in a fixed position relative to the airframe, and/or rotatably and pivotally coupled to, for example, the underside surface of the airframe (or another structural component) via a gimbal system to enable the sensors 166 to be more easily oriented downward to monitor objects below and/or on the ground. The data may be dynamically or periodically communicated from the aircraft to the remote device 254 over the network 252 via the wireless transceiver 250, or stored to the memory device 242 for later access or processing.

The aircraft processor 162 may be operatively coupled with a system that provides environment data, based on sensor readings and/or known navigational maps (*e.g.,* a map of the environment reflecting obstacles and/or boundaries), which may be loaded and stored to the aircraft (*e.g.,* at the memory device 242). In certain aspects, the navigation system 248 may employ sensor data from the sensors 166 to determine the aircraft position within an environment.

The aircraft processor 162 may be operatively coupled with the object manipulation system 160 to provide two-way communication between the object manipulation system 160 (*e.g.,* acquire sensor data and/or transmit commands) and the aircraft processor 162. In operation, the aircraft processor 162 may communicate object-relative stabilization data to the object manipulation system 160 and receive from the object manipulation system 160 position commands/data. For example, commands may be communicated to the object manipulation system 160 from the aircraft processor 162 based at least in part on commands from an operator, autopilot, the navigation system 248, the sensors 166, or other high-level systems. Therefore, in one aspect, the object manipulation system 160, including its one or more robotic arms (or other actuators/grippers/etc.), may be configured to operate in response to commands from an operator. The operator may be remotely situated and communicatively coupled with the object manipulation system 160 via a remote device 254 over a wireless link (network 252). Further, feedback from the object manipulation system's 160 sensors 166 contact with surfaces of the object, as well as position sensing of the object to be grasped and emplaced, can aid in a determination on where to land, how to secure the object, etc.

The sensors 166 may include an optical module, for example, having an infrared (IR) camera, a RGB (red/green/blue) camera, a laser projector, etc. The optical module may be positon toward the back of a robotic arm (*e.g*., robotic arm 128, etc.) configured with a forward field of view to capture images of the object 120 and environment. The sensors 166 may employ one or more sensing technologies to achieve depth perception, 3D imaging, interior mapping, and feature tracking. The IR camera, together with the IR laser projector, provides depth information to calculate a spatial relationship between robotic arm and the object 120. To that end, the IR camera may be one of a pair of cameras, spaced apart from one another to capture different perspective views (*i.e*., angles) of the object 120 and environment. Using this data, the object manipulation system 160 (via a respective processor, such as object manipulation processor 168) can measure the 3-D location of the object 120 with respect to the robotic arm to a very high resolution.

Other feedback sensors may include, for example, pressure transducers, touch sensors, etc. Touch sensing is used to facilitate impedance control of the object manipulation system 160 and can be achieved using pressure sensors embedded in cast rubber. For example, tactile sensors (*e.g*., pressure transducers or strain gauges) may be placed on a surface of the robotic arm at a position to make contact with the object 120. Additionally, the motors that drive gears of robotic arm could be used to perform tactile feedback through current sensing in the motor circuit. The object manipulation system 160 can use information from the optical module to plan an approach route to quickly move the robotic arm and its touch sensors toward the object 120. For instance, the robotic arm may be an active gripper with multiple finger members, although other forms of grippers are contemplated to provide a desired grip force, such as pinching, entrapment, capture, and vacuum suction.

The object manipulation system 160 may further employ barcodes (*e.g*., positioned on the object 120) to identify the object 120 via the RGB camera 166a. Multiple fiducial markers (*e.g.,* April tags or ARtags) on the robotic arm can aid in the determination of the exact position of the robotic arm. The aircraft processor 162, via the sensor 166, is configured to track the plurality of fiducial markers.

Although described as operating on a single processor (*e.g*., aircraft processor 162) two or more processors can be employed for specific functions. For example, each of the flight controller 238 and object manipulation system 160 can have dedicated processors, which communicate with each other, as well as the aircraft processor 162.

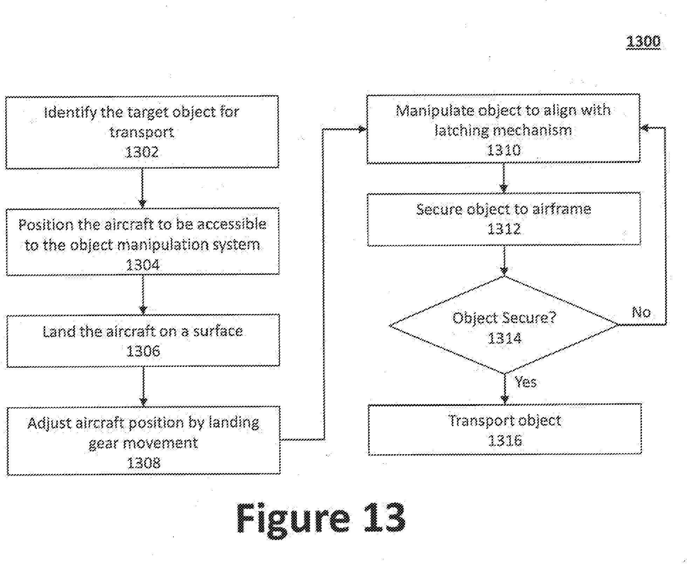

Figure 13 illustrates a method 1300 of manipulating an object from an aircraft based system. The method 1300 can be a set of instructions (*e.g*., an algorithm, code, software, etc.) executed on one or more processors (*e.g*., object manipulation processor 168 or aircraft processor 162). In block 1302, the system identifies a characteristic associated with a target object (*e.g.,* object 120) for transport via a first sensor (*e.g.*, via one or more sensors 166). In block 1304, the aircraft is positioned to hover over the object such that the object is accessible to an object manipulation system (*e.g*., object manipulation system 104). In some examples, as provided in block 1306, the aircraft lands on a surface by a landing gear system (*e.g*., landing gear 108, using limbs 216a, 216b at landing gear, etc.) attached to the airframe 102 of the aircraft 100.

Once landed, the position of the aircraft is adjusted via the landing gear to align the object with a latching mechanism (*e.g*., latching mechanism 132, etc.), while the landing gear system maintains contact with the surface during adjustment, as shown in block 1308. In block 1310, the object is manipulated by the object manipulation system to align the object with a latching mechanism (*e.g*., latching mechanism 132, etc.). In block 1312, the object is secured to the aircraft by latching mechanism. In block 1314, the system determines whether the object is properly secured to the airframe. In block 1316, the aircraft takes off with the secured object for transport.

In an example autonomous system, the method 1300 can be executed by various logic routines, informed by the plural sensors, with information provided by stored media, which can include trend analysis from previous operations, networked information, etc., to effectively identify, approach, secure, and transport an object, without the need for human intervention.

The above-cited patents and patent publications are hereby incorporated by reference in their entirety. Where a definition or the usage of a term in a reference that is incorporated by reference herein is inconsistent or contrary to the definition or understanding of that term as provided herein, the meaning of the term provided herein governs and the definition of that term in the reference does not necessarily apply. Although various embodiments have been described with reference to a particular arrangement of parts, features, and the like, these are not intended to exhaust all possible arrangements or features, and indeed many other embodiments, modifications, and variations will be ascertainable to those of skill in the art. Thus, it is to be understood that the teachings of the subject disclosure may therefore be practiced otherwise than as specifically described above.

The disclosure comprises the subject matter described in the following clauses:
Clause 1. An aerial manipulation system for manipulating an object via an aircraft, the aerial manipulation system comprising:
   a plurality of sensors, configured to identify a physical characteristic of the object;
   an object manipulation system coupled to an airframe of the aircraft and configured to secure the object to the airframe; and
   a processor communicatively coupled to the plurality of sensors, and configured to control operation of the object manipulation system based at least in part on information from the plurality of sensors, wherein the processor is further configured to control alignment between the object and the airframe.
Clause 2. The aerial manipulation system of clause 1, wherein the plurality of sensors, comprises an optical module.
Clause 3. The aerial manipulation system of clause 1 or clause 2, wherein the object manipulation system comprises one or more robotic arms to (1) align the airframe and the object and (2) secure the object relative to the airframe.
Clause 4. The aerial manipulation system of clause 3, wherein the one or more robotic arms are configured to account for movement of the aircraft, thereby allowing the aircraft to move while maintaining contact between at least one robotic arm and the object.
Clause 5. The aerial manipulation system of clause 3 or clause 4, wherein the object manipulation system comprises a latching mechanism coupled to the airframe, the one or more robotic arms being configured to position the object relative to the latching mechanism in order to secure the object to the airframe.
Clause 6. The aerial manipulation system of any of clauses 3 to 5, wherein the one or more robotic arms are configured to secure the object relative to the airframe in a position that is at or near the center of mass of the aircraft.
Clause 7. The aerial manipulation system of any of the clauses above, wherein the aircraft is configured to cooperate with a ground-based landing structure to facilitate object manipulation.
Clause 8. The aerial manipulation system of clause 7, wherein the ground-based landing structure comprises one or more landing supports sized and shaped to accept the aircraft.
Clause 9. The aerial manipulation system of clause 8, wherein one or more landing supports are configured to guide the object manipulation system toward the object during a landing operation of the aircraft based at least in part on a characteristic of the object or the aircraft.
Clause 10. The aerial manipulation system of any of the clauses above, wherein the one or more robotic arms are configured to pick up the object.
Clause 11. The aerial manipulation system of any of the clauses above, wherein the aircraft is a VTOL aircraft that comprises landing gear coupled to the airframe, wherein the landing gear is configured to retract during object acquisition and to deploy during a landing operation of the aircraft.
Clause 12. The aerial manipulation system of any of the clauses above, wherein the object manipulation system comprises one or more feedback sensors, to provide feedback data to the processor when interacting with the object.
Clause 13. The aerial manipulation system of any of the clauses above, wherein the object comprises a code or a fiducial marker to aid in determining a physical characteristic of the object.
Clause 14. The aerial manipulation system of any of the clauses above, wherein the object is stationary and the processor is configured to control a flight controller of the aircraft as a function of inputs from the plurality of sensors, to align the airframe with the object by adjusting the position and orientation of the aircraft.
Clause 15. The aerial manipulation system of any of the clauses above, wherein the object is movable and the processor is configured to control the object manipulation system to align the object with the airframe.
Clause 16. A method of manipulating an object using an aerial manipulation system of an aircraft, the method comprising:
   identifying, via a first sensor, a characteristic associated with a target object for transport;
   positioning the aircraft to hover over the object such that the object is accessible to an object manipulation system;
   aligning the object and a latching mechanism; and
   securing the object, via the latching mechanism, to the aircraft.
Clause 17. The method of clause 16, further comprising:
   landing the aircraft on a surface by a landing gear system attached to an airframe of the aircraft;
   adjusting a position of the aircraft via the landing gear to align the latching mechanism with the object, wherein the landing gear system maintains contact with the surface during adjustment; and
   taking off with the secured object.
Clause 18. A ground-based landing structure to facilitate manipulation of an object using an object manipulation system coupled to an aircraft, the ground-based landing structure comprising:
   an object support element to support the object; and
   a landing support element to support the aircraft upon landing, wherein the landing support element is configured to guide the aircraft during a landing operation of the aircraft to direct the object manipulation system toward the object.
Clause 19. The ground-based landing structure of clause 18, wherein the ground based landing structure is configured to adjust the object support element based at least in part on a characteristic of the object or the aircraft.
Clause 20. The ground-based landing structure of clause 18 or clause 19, wherein the ground based landing structure comprises a plurality of wheels and a drive system to move the object relative to the aircraft or the object manipulation system during a landing operation of the aircraft.
Clause 21. The ground-based landing structure of clause 18, clause 19 or clause 20, wherein the ground-based landing structure is configured to account for unexpected or unwanted movement of the aircraft dynamically during a landing operation of the aircraft.

## Claims

1. An aerial manipulation system (104, 160) for manipulating an object (120, 120a, 120b) via an aircraft (100), the aerial manipulation system (104, 160) comprising:
a plurality of sensors (166, 118, 124), configured to identify a physical characteristic of the object (120, 120a, 120b);
an object (120, 120a, 120b) manipulation system (104, 160) coupled to an airframe (102) of the aircraft (100) and configured to secure the object (120, 120a, 120b) to the airframe (102); and
a processor (168) communicatively coupled to the plurality of sensors (166, 118, 124), and configured to control operation of the object (120, 120a, 120b) manipulation system (104, 160) based at least in part on information from the plurality of sensors (166, 118, 124), wherein the processor (168) is further configured to control alignment between the object (120, 120a, 120b) and the airframe (102).

2. The aerial manipulation system (104, 160) of claim 1, wherein the plurality of sensors (166, 118, 124) comprises an optical module (172).

3. The aerial manipulation system (104, 160) of claim 1 or claim 2, wherein the object (120, 120a, 120b) manipulation system (104, 160) comprises one or more robotic arms (206b) to (1) align the airframe (102) and the object (120, 120a, 120b) and (2) secure the object (120, 120a, 120b) relative to the airframe (102).

4. The aerial manipulation system (104, 160) of claim 3, wherein the one or more robotic arms (206b) are configured to account for movement of the aircraft (100), thereby allowing the aircraft (100) to move while maintaining contact between at least one robotic arm (206b) and the object (120, 120a, 120b).

5. The aerial manipulation system (104, 160) of any of the claims above, wherein the aircraft (100) is configured to cooperate with a ground-based landing structure (228) to facilitate object (120, 120a, 120b) manipulation.

6. The aerial manipulation system (104, 160) of claim 5, wherein the ground-based landing structure (228) comprises one or more landing supports (232) sized and shaped to accept the aircraft (100).

7. The aerial manipulation system (104, 160) of claim 6 wherein one or more landing supports (232) are configured to guide the object (120, 120a, 120b) manipulation system (104, 160) toward the object (120, 120a, 120b) during a landing operation of the aircraft (100) based at least in part on a characteristic of the object (120, 120a, 120b) or the aircraft (100).

8. The aerial manipulation system (104, 160) of any of the claims above, wherein the one or more robotic arms (206b) are configured to pick up the object (120, 120a, 120b).

9. The aerial manipulation system (104, 160) of any of the claims above, wherein the aircraft (100) is a VTOL aircraft (100) that comprises landing gear (108) coupled to the airframe (102), wherein the landing gear (108) is configured to retract during object (120, 120a, 120b) acquisition and to deploy during a landing operation of the aircraft (100).

10. The aerial manipulation system (104, 160) of any of the claims above, wherein the object (120, 120a, 120b) manipulation system (104, 160) comprises one or more feedback sensors (166, 118, 124), to provide feedback data to the processor (168) when interacting with the object (120, 120a, 120b).

11. The aerial manipulation system (104, 160) of any of the claims above, wherein the object (120, 120a, 120b) comprises a code or a fiducial marker to aid in determining a physical characteristic of the object (120, 120a, 120b).

12. The aerial manipulation system (104, 160) of any of the claims above, wherein the object (120, 120a, 120b) is stationary and the processor (168) is configured to control a flight controller of the aircraft (100) as a function of inputs from the plurality of sensors (166, 118, 124), to align the airframe (102) with the object (120, 120a, 120b) by adjusting the position and orientation of the aircraft (100).

13. The aerial manipulation system (104, 160) of any of the claims above, wherein the object (120, 120a, 120b) is movable and the processor (168) is configured to control the object (120, 120a, 120b) manipulation system (104, 160) to align the object (120, 120a, 120b) with the airframe (102).

14. A method of manipulating an object (120, 120a, 120b) using an aerial manipulation system (104, 160) of an aircraft (100), the method comprising:
identifying, via a first sensor (166, 118, 124), a characteristic associated with a target object (120, 120a, 120b) for transport;
positioning the aircraft (100) to hover over the object (120, 120a, 120b) such that the object (120, 120a, 120b) is accessible to an object (120, 120a, 120b) manipulation system (104, 160);
aligning the object (120, 120a, 120b) and a latching mechanism; and
securing the object (120, 120a, 120b), via the latching mechanism, to the aircraft (100).

15. The method of claim 14, further comprising:
landing the aircraft (100) on a surface by a landing gear (108) system attached to an airframe (102) of the aircraft (100);
adjusting a position of the aircraft (100) via the landing gear (108) to align the latching mechanism with the object (120, 120a, 120b), wherein the landing gear (108) system maintains contact with the surface during adjustment; and
taking off with the secured object (120, 120a, 120b).
